# EUROPÄISCHE PATENTSCHRIFT

(11) **EP 0 652 855 B1**
(45) Veröffentlichungstag und Bekanntmachung des Hinweises auf die Patenterteilung: **22.05.1996**
(21) Anmeldenummer: 93915658.4
(22) Anmeldetag: 20.07.1993
(51) Int. Cl.: C04B 33/02, C04B 33/24

(54) **VERFAHREN ZUR HERSTELLUNG VON PULVERFÖRMIGEN MASSEN FÜR DAS SPRITZGIESSEN KERAMISCHER MATERIALIEN UND DEREN VERWENDUNG**
METHOD OF PRODUCING POWDER-FORM MOULDING COMPOUNDS FOR THE INJECTION-MOULDING OF CERAMIC MATERIALS, AND THE USE OF SUCH COMPOUNDS
PROCEDE POUR LA FABRICATION DE MATERIAUX PULVERULENTS POUR LE MOULAGE PAR INJECTION DE MATERIAUX CERAMIQUES ET UTILISATION DE CES MATERIAUX PULVERULENTS

(30) Priorität: 03.08.1992 DE 4225623
(43) Veröffentlichungstag der Anmeldung: 17.05.1995
(73) Patentinhaber: Hehl, Karl, D-72290 Lossburg (DE)
(72) Erfinder: Hehl, Karl, D-72290 Lossburg (DE)
(74) Vertreter: Reinhardt, Harry
(86) Internationale Anmeldenummer: DE9300652
(87) Internationale Veröffentlichungsnummer: WO9403408

(56) Entgegenhaltungen:
- GB-A- 2 139 209
- US-A- 1 644 244
- Derwent's abstract, Nr 91-228490/31, week 9131, ABSTRACT OF SU, A, 1606497 (ARTASHAT PORCELAIN), 15 November 1990 (15.11.90)

## Beschreibung

Die Erfindung betrifft ein Verfahren zur Herstellung einer pulverförmigen Spritzgußmasse für die Porzellanherstellung nach Anspruch 1 oder 2 sowie die Verwendung der danach hergestellten Masse nach Anspruch 7 oder 8.

Theoretisch versucht die Industrie seit vielen Jahren, auch die Herstellung von Porzellan der Spritzgußtechnik zugänglich zu machen. In Versuchsanordnungen ist dies bisher nur insoweit geglückt, als den keramischen Ausgangsstoffen Bindemittel zugemischt worden sind, die das Ausgangsmaterial dem Spritzgießen, also insbesondere dem Transport mittels einer Förderschnecke in einen Formhohlraum zugänglich machen. Diese Binde mittel werden hinterher durch thermische Behandlungen aus dem keramischen Rohling ausgetrieben oder katalytisch umgewandelt. Das Zusetzen und nachfolgende Austreiben eines Bindemittels ist auch außerhalb des Spritzgußsektors, beispielsweise aus der DE-PS 23 64 242 bekannt. In der Praxis treten bei der Verarbeitung derartiger Mischungen, insbesondere spritzgußfähiger Binderporzellanmischungen Probleme dadurch auf, daß in den verwendeten tonigen Rohstoffkomponenten Kristallwasser eingelagert ist, das bei der 'Entbinderung', also beim Austreiben des Binders, Aufblähungen im Rohling verursacht.

Bei der Porzellanherstellung ist bei verschiedenen Herstellungsmethoden stets die Zugabe von Wasser zum einen zur Aufbereitung der Massen und zum anderen während der Formgebung erforderlich, so daß Wasser an das Material gebunden ist. Diese flüssige Phase bei der Formgebung ist als ein Mittel zu betrachten, das die Verschiebbarkeit der Teilchen gegeneinander erleichtert und unter einer Druckkomponente neue Adhäsionskräfte zwischen den Teilchen aufbaut. Insofern ist selbst in trockenen Preßmassen noch ein Wassergehalt von 4% bis 8% zu finden. Die für die Herstellung von Keramik verwendeten Rohstoffe wie die aus primären Vorkommen stammenden Kaoline und die aus sekundären Vorkommen stammenden Tone sind grundsätzlich bildsam und liegen grundsätzlich in der erforderlichen Kornfeinheit von Korngrößen unter 60 µm vor. Für die üblichen Herstellungsverfahren wie das Isostatpressen, das Rollern, das Schlickergießen und das altbekannte Drehen ist insofern die Anordnung der Kristalle des Materials von untergeordneter Bedeutung, da diese Teile nicht für das Entweichen von Bindermaterial geeignet sein müssen. Bei der Herstellung von Porzellan durch Spritzgießen hat sich jedoch gezeigt, daß sich die Schichten der Schichtsilicate beim Spritzvorgang einregeln, d.h., daß beim fertigen Spritzling eine Textur vorhanden ist, bei der die Schichtsilicate parallel zur Bauteilwand liegen. Dies führt dazu, daß die Gase bei der Entbinderung wesentlich längere Wege benötigen und somit eine Entbinderung sehr erschwert ist. Diese Einregelung und die damit auftretende Anisotropie in Richtung der Schichtsilicate gegenüber einer Richtung normal zu den Schichtsilicaten führt insbesondere zu einem nicht definierbaren Schwund der Teile.

Aus der US-A 1 644 244 ist bekannt, eine Masse herzustellen, bei der bewußt Topaz in Mullit umgewandelt wird. Diese Masse führt aufgrund des Mullitgehaltes zu einem homogenen und äußerst widerstandsfähigen Endprodukt, das in der keramischen Industrie insbesondere im Bereich von Ziegelsteinen, Öfen, Kesseln und Schmelztiegeln erwünscht ist. Ein Einsatz für die Herstellung von Porzelan ist nicht beabsichtigt. Darüber hinaus enthält der für die dortige Herstellung unerläßliche Topaz fluorhaltige Schichtsilikate, die nach heutiger Erkenntnis während des Brennens äußerst aggressive Radikale bilden, die in der Porzellanherstellung unerwünscht sind, da sie zu Beschädigungen an den Brennöfen führen.

Nach der DE-AS 24 09 942 wird eine Spritzgußmasse für keramische Produkte aus keramischen Rohmaterialien und Polypropylen als organischem Bindemittel hergestellt, um durch die Verwendung von ataktischem Polypropylen als Bindemittel für pulverisierte keramische Rohmaterialien Schwinderscheinungen, Risse und Blasen sowie Dichteinkonsistenzen beim Spritzgießen zu vermeiden. Dabei werden auch Aluminiumoxyd, Talkum und Ton eingesetzt, die naß vermahlen und dann zu einem Pulver getrocknet werden, und diese Stoffe werden auch einer Temperaturbehandlung unterzogen, die jedoch nicht geeignet ist, kristallographisch gebundenes Kristallwasser auszutreiben.

Ausgehend von diesem Stand der Technik, liegt der Erfindung die Aufgabe zugrunde, eine Spritzgußmasse für die Herstellung von Porzellan sowie verbesserte Rohlinge für die Porzellanher-stellung zu schaffen.

Diese Aufgabe wird durch die Merkmale der Ansprüche 1,2,7 oder 8 gelöst.

Bei der kristallographischen Veränderung des Ausgangsmaterials wird nebenbei Kristallwasser ausgetrieben, so daß es nicht mehr zu Beschädigungen des Endprodukts führt, nachdem zuvor ein großer Energieaufwand getrieben worden ist, um die Spritzlinge herzustellen.

Wird der Schichtsilicatanteil der keramischen Massen während der Behandlung in nicht schichtförmig aufgebaute Minerale umgewandelt, können Teile hergestellt werden, die homogen aufgebaut sind und über isotrope Eigenschaften verfügen. Insofern müssen nicht mehr komplizierte Gebilde in mehrstufigen Verfahren hergestellt und anschließend zusammengesetzt werden, sondern das Material kann in komplex gestaltete Formhohlräume eingespritzt werden, und der fertige Spritzling in nachfolgenden Schritten bis zum Endprodukt verarbeitet werden. Durch die Verwendung von vorbehandelten Schichtsilicaten können somit unabhängig von der kristallographischen Rohstoffqualität Porzellanmassen mit Binder vermischt und somit spritz-, entbinder- und sinterfähig gemacht werden. Insofern kann die Masse nach ihrer idealen Stöchiometrie zusammengesetzt werden.

Die Temperaturbehandlung kann dabei ein interner Prozeß des Verfahrens sein, als auch bei der Herstellung vorausgegangener Produktionsreihen bereits erfolgt sein. So kann nach einer Ausgestaltung des Verfahrens die Behandlung dadurch erfolgt sein, daß die Masse zermahlenes geschrühtes oder zermahlenes glattgebranntes Porzellan enthält. Dadurch wird der bisherige Ausschuß bei der Porzellanherstellung als neue Rohstoffquelle entdeckt. Ein derartiger Ausschuß entsteht insbesondere beim 'Schrühen', also dem Vorbrand und beim Glattbrand oder Glasurbrand des Porzellans. Dieser Ausschuß wird zu mehr als 90% nicht mehr weiterverwendet und als Abfall deponiert. Aufgrund des Brennens ist jedoch die Kristallstruktur der verwendeten Materialien so verändert, daß Schichtsilicate nicht mehr vorliegen. Dadurch ist es möglich, einerseits die Abfallberge zu verringern und andererseits in energiesparender Weise weitere Teile herzustellen, wobei die in den Ausschuß eingebrachte Energie wiedergewonnen wird.

Dadurch ist es aber auch möglich, die Rohlinge auf üblichen Spritzgußmaschinen wie z.B. Kunststoff-Spritzgießmaschinen herzustellen, ohne daß Veränderungen an der Maschine erforderlich sind, die über den Einsatz einer hochverschleißfesten Garnitur für die Spritzgießmaschine hinausgehen. Der Vorteil dieses Einsatzes macht sich insbesondere bei der Herstellung von Gefäßen und Spritzlingen bemerkbar. Gefäße besitzen meist einen das eigentliche Gefäß bildenden Gefäßteil und einen Henkel. In der Porzellanherstellung werden bisher beide Teile zunächst gesondert angefertigt und dann aneinandergefügt. Dies führt vor allem bei der Tassenherstellung zu einem hohen Ausschuß, der zudem erst nach dem Glattbrand zutage tritt. Zu diesem Zeitpunkt wurden aber zwei energieintensive Verfahrensschritte mit Temperaturen von beispielsweise 980 bzw. 1350 °C durchgeführt. Wird das gleiche Teil im Spritzgußverfahren hergestellt, ergibt sich eine homogene Verbindung zwischen Henkel und Gefäßteil, da der Spritzling 'in einem Guß' hergestellt worden ist. Dadurch kann die hohe Ausschußrate von üblichen Porzellanherstellungsverfahren deutlich verringert werden.

Im folgenden wird die Erfindung anhand der Zeichnungen an Ausführungsbeispielen näher erläutert.

Es zeigen:
- Fig. 1: Ein Ablaufdiagramm des Verfahrens,
- Fig. 2: ein weiteres Ablaufdiagramm unter Einsatz bestehender Rohstoffressourcen.

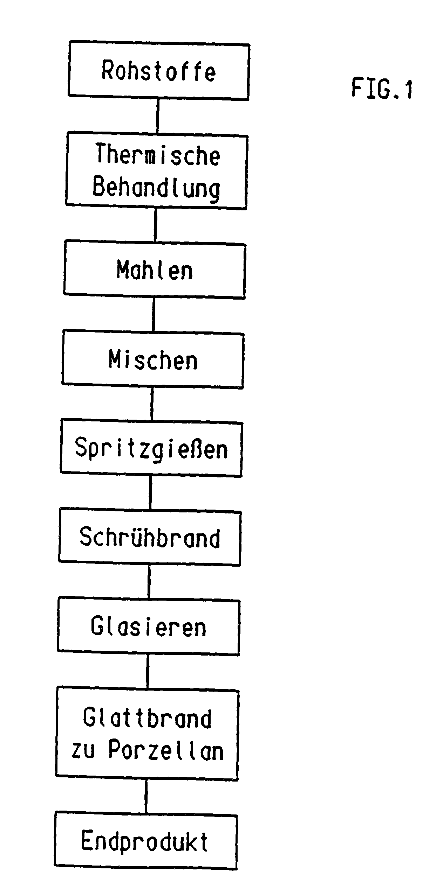

Zunächst wird das Verfahren an Figur 1 erläutert. Nach dem Verfahren wird eine pulverförmige Spritzgußmasse für die Herstellung von Porzellan hergestellt. Um diese Materialien dem Spritzgießen zugänglich zu machen, wird der pulverförmigen Masse ein Bindemittel zugesetzt, das nach der Formgebung entfernbar ist. Dieses Austreiben kann entweder auf katalytischem Wege oder durch eine thermische Behandlung erfolgen, die zu einer Verflüchtigung des Bindemittels führt. Es ist auch möglich, die Entbinderung durch eine Umsetzung des Bindemittels durchzuführen.

Gebräuchliche Rohstoffe wie z.B. Kaoline aus primären Vorkommen und Tone aus sekundären Vorkommen werden vor dem Vermischen von Pulver und Bindemittel einer Temperatur- und ggf. einer Druckbehandlung unterzogen, bei der im Kristallgitter enthaltenes Kristallwasser ausgetrieben wird, wodurch Aufblähungen des entweichenden Wassers in nachfolgenden Verfahrensschritten zur Herstellung des Endprodukts vermieden werden. Bei diesen Ronstoffen handelt es sich um schichtförmig aufgebaute Stoffe, meist um Schichtsilicate, die einerseits zu anisotropen Eigenschaften des fertigen Teiles und damit zu nicht definierbarem Schwund der Teile führen, die andererseits aber auch ein Entweichen des Bindemittels durch eine Vergrößerung der Wege für das Entweichen der Gase erschweren. Daher wird die Behandlung auch zur vollständigen Zerstörung der Schichtsilicate verwendet. Dabei wird der Schichtsilicatanteil der keramischen Massen in nicht schichtförmig aufgebaute pulverförmige Stoffe umgewandelt. Die Kaoline und Tone wandeln sich in Mullit (3:2) orthorhombisch Al (Al_{1,25}Si_{0,75}0_{4,875}) und Mullit (2:1) orthorhombisch Al (Al_{1,4}Sl_{0,6}0_{4,8}) oder in eines von beiden um. Bei diesem Umwandlungsprozeß kann auch eine Glasphase mit nicht kristallinem Material und können weitere Mineral phasen entstehen. Der entstehende Mullit ist das einzige bei Normaldruck stabile Aluminiumsilicat, farblos und kristallisiert rhombisch in Nadelform mit nahezu rechteckigen Querschnitten. Bei häufigen Schwankungen um eine Mitteltemperatur können dabei kugelförmige Mullite entstehen. Grundsätzlich besitzt der Mullit isotrope Eigenschaften, die sich für die nachfolgenden Verfahrensschritte positiv bemerkbar machen.

Die thermische Behandlung erfolgt bei einer Temperatur bis zu 1000 °C, kann jedoch unter Zusatz bekannter Zusätze auch bei einer Temperatur von ungefähr 500 °C erfolgen.

Nach der Behandlung wird das Material gemahlen und das Pulver mit dem Bindemittel vermischt. Dann erfolgt das Spritzgießen und die erhaltenen Teile werden bei der Herstellung von Porzellan noch den üblichen Brennprozessen wie dem Schrühbrand und dem Glattbrand unter Zwischenschaltung des Glasierens bis zum Fertigprodukt unterworfen. Üblicherweise wird, wie in den Figuren ersichtlich, eine thermische Behandlung vorgesehen. Durch entsprechende Änderungen des dabei vorhandenen Druckes kann jedoch auch die Temperatur bei gleichbleibendem Erfolg geändert werden.

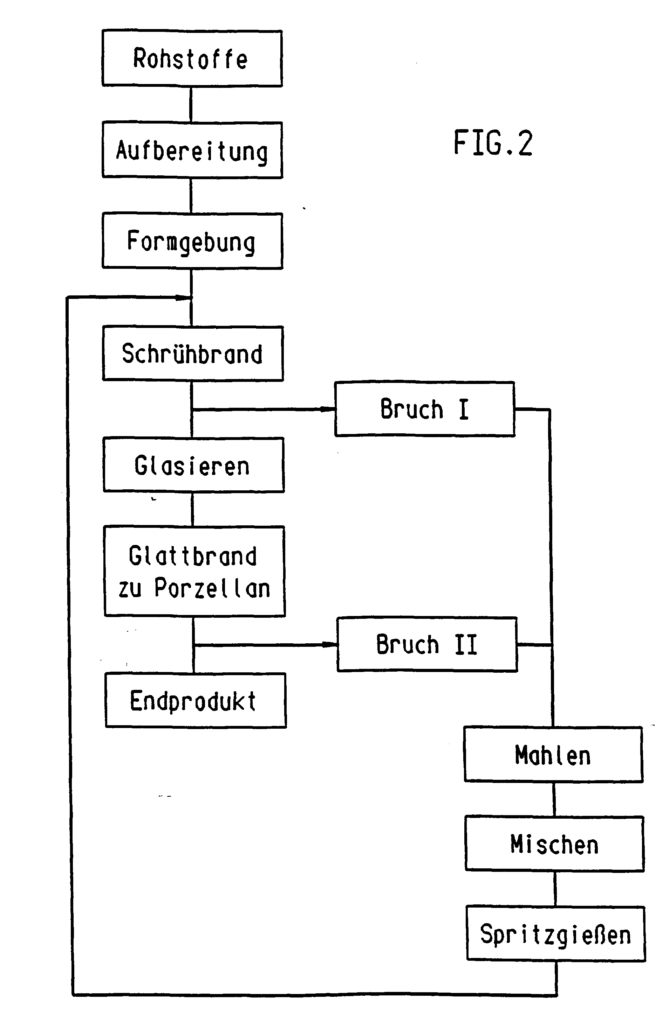

Figur 2 zeigt, daß es nicht unbedingt erforderlich ist, eine gesonderte thermische Behandlung vorzusehen. Dieselben Rohstoffe werden hier bei der bekannten Porzellanherstellung aufbereitet, also gereinigt, gemahlen und unter Zusatz von Wasser in die gewünschte Form gebracht. Sodann erfolgt der übliche Schrühbrand, das Glasieren und der Glattbrand, wobei beim Schrühen und Glattbrennen Ausschuß entsteht, der in der Figur als Bruch I und Bruch II gekennzeichnet ist. Diese Bruchmaterialien wurden aber durch die vorgeschalteten Brennprozesse Temperaturen unterworfen, die zu einer Veränderung der Struktur der Rohstoffe geführt haben. Das Kristallwasser ist ausgetrieben und es sind auch die Schichtsilicate in nicht schichtförmig aufgebaute Stoffe umgewandelt. Bei dem Verfahren nach Figur 2 macht man sich also die dem Ausschuß zugeführte Energie zunutze und verwendet den Ausschuß für die Herstellung neuer Rohstoffe, z.B. für die Herstellung von Porzellanspritzgußmassen.

Im folgenden wird der Verfahrensablauf ab dem 3. Verfahrensschritt von Figur 1 erläutere, indem wiederum ein Mahlen, Mischen, Spritzgießen erfolgt und der gewonnene Spritzling dem Schrühen, Glasieren und Glattbrennen bis zum fertiggestellten Produkt unterworfen wird. Gerade beim Spritzgießen ist es aber möglich, die Masse einzufärben und in aus der Spritzgußtechnik bekannter Weise zu marmorieren.

In der Porzellanherstellung macht sich die Verwendung von im Spritzguß hergestellten Rohlingen positiv bemerkbar. Dadurch ist es möglich, beliebig geformte keramische Teile einer Massenfertigung zugänglich zu machen. Als Beispiel seien Gefäße wie Tassen genannt, die bisher, wenn auch bereits zum Teil automatisiert, aus verschiedenen Teilstücken aufgebaut sind. Zunächst wird als eigentliches Gefäßteil der Tassenkörper hergestellt, an den gegebenenfalls maschinell der Henkel angeformt wird. Verständlicherweise sind diese beiden Teile an den Übergangspunkten nicht homogen, so daß es insbesondere nach dem Glattbrennen zu einem hohen Ausschuß kommt. Wird der gleiche Spritzling im Spritzgießverfahren hergestellt, so ergibt sich über den gesamten Spritzling hinweg eine homogene Verteilung und ein Anfügen weiterer Teile in nachgeschaltetem Verfahren ist nicht mehr erforderlich. Ein Bruch tritt also nicht mehr vorprogrammiert an einer Verbindungsstelle verschiedener Materialien auf, sondern er kann nur noch durch materialspezifische Eigenschaften an jedem Punkt des Gefäßes stattfinden. Lassen sich die Spritzlinge beispielsweise bei Kannen nicht oder nur schwer entformen, können auch schalenförmige Elemente gefertigt werden, die vor weiteren Schritten z.B. der Porzellanherstellung zusammengefügt werden.

Durch eine vorgeschaltete Behandlung werden also die Eigenschaften der Rohstoffe verändert. Dabei wird das Kristall A durch Zufuhr von Energie, die selbstverständlich auch in anderer Form als wie nur durch Wärme aufgebracht werden kann, irreversibel in ein Kristall B verwandelt.

## Patentansprüche

1. Verfahren zur Herstellung einer pulverförmigen Spritzgußmasse für die Porzellanherstellung, dessen keramisches Ausgangsmaterial mit einem Bindemittel vermischt wird, das nach der Formgebung entfernbar ist,
dadurch gekennzeichnet, daß die Schichtsilikate enthaltende Ausgangsmasse vor dem Vermischen mit dem Bindemittel einer Wärmebehandlung unterworfen wird zur Umwandlung der Schichtsilikate in nicht schichtfömig aufgebaute Minerale.

2. Verfahren zur Herstellung einer pulverförmigen Spritzgußmasse für die Porzellanherstellung, dessen keramisches Ausgangsmaterial mit einem Bindemittel vermischt wird, das nach der Formgebung entfernbar ist,
dadurch gekennzeichnet, daß -als keramisches Ausgangsmaterial nicht schichtförmig aufgebaute pulverförmige Stoffe verwendet werden, wobei keine fluorhaltigen Stoffe im Ausgangsmaterial enthalten sind.

3. Verfahren nach Anspruch 1 oder 2, dadurch gekennzeichnet, daß die Masse vor dem Mischen einer Wärmebehandlung unter gleichzeitiger Aufbringung eines Überdrucks unterzogen wird.

4. Verfahren nach Anspruch 1 oder 2, dadurch gekennzeichnet, daß die Masse zermahlenes, geschrühtes Porzellan enthält.

5. Verfahren nach Anspruch 1 oder 2, dadurch gekennzeichnet, daß die Masse zermahlenes glattgebranntes Porzellan enthält.

6. Verfahren nach Anspruch 1 oder 2, dadurch gekennzeichnet, daß wenigstens zwei Massen vor dem Spritzgießen verschieden eingefärbt und vermischt werden.

7. Verwendung der nach einem der vorhergehenden Ansprüche hergestellten Spritzgußmasse zur Herstellung von Gefäßteilen, die nach der Formgebung zusammengefügt werden.

8. Verwendung der nach einem der Ansprüche 1 bis 6 hergestellten Spritzgußmasse zur unmittelbaren Herstellung von Gefäßen mit wenigstens einem Henkel.

## Claims

1. Method of producing a pulverulent injection moulding compound for the production of porcelain, the ceramic base material of which is mixed with a binding means which can be removed after the moulding process, characterised in that the base compound containing stratified silicates is subjected to a heat treatment before the mixing process with the binding means for the conversion of the stratified silicates into minerals which are constructed in a non-stratified form.

2. Method of producing a pulverulent injection moulding compound for the production of porcelain, the ceramic base material of which is mixed with a binding means which can be removed after the moulding process, characterised in that pulverulent materials constructed in a non-stratified form are used as the ceramic base material, no materials containing fluorine being contained in the base material.

3. Method according to claim 1 or 2, characterised in that, before the mixing process, the compound is subjected to a heat treatment where an overpressure is simultaneously applied.

4. Method according to claim 1 or 2, characterised in that the compound contains ground, baked porcelain.

5. Method according to claim 1 or 2, characterised in that the compound contains ground, glost fired porcelain.

6. Method according to claim 1 or 2, characterised in that at least two compounds are coloured differently and mixed before the injection moulding process.

7. Use of the injection moulding compound, produced in accordance with one of the preceding claims, for the production of container parts which are assembled after the moulding process.

8. Use of the injection moulding compound, produced in accordance with one of the claims 1 to 6, for the direct production of containers with at least one handle.

## Revendications

1. Procédé pour produire une matière pulvérulente à mouler par injection,destinée à la fabrication de porcelaine, faïence ou analogue et dont le matériau de départ céramique est mélangé avec un liant susceptible d'être éliminé après le façonnage,
caractérisé en ce que la matière de départ, contenant des silicates stratifiés, est soumise, avant le mélange avec le liant, à un traitement thermique en vue de la transformation des silicates stratifiés en minéraux à structure non stratifiée.

2. Procédé pour produire une matière pulvérulente à mouler par injection, destinée à la fabrication de porcelaine, faïence ou analogue et dont le matériau de départ céramique est mélangé avec un liant susceptible d'être éliminé après le façonnage,
caractérisé en ce que, comme matériau de départ céramique, on utilise des substances pulvérulentes à structure non stratifiée, le matériau de départ ne renfermant pas de substances contenant du fluor.

3. Procédé selon la revendication 1 ou 2, caractérisé en ce que, avant le mélange, la matière est soumise à un traitement thermique avec application simultanée d'une surpression.

4. Procédé selon la revendication 1 ou 2, caractérisé en ce que la matière contient, à l'état broyé, de la porcelaine ayant subi un dégourdi.

5. Procédé selon la revdndication 1 ou 2, caractérisé en ce que la matière contient, à l'état broyé, de la porcelaine ayant subi un grand feu.

6. Procédé selon la revendication 1 ou 2, caractérisé en ce qu'au moins deux matières sont colorées différemment et mélangées avant le moulage par injection.

7. Utilisation de la matière à mouler par injection, produite selon une des revendications précédentes, pour la fabrication de parties de récipients qui sont assemblées après le façonnage.

8. Utilisation de la matière à mouler par injection, produite selon une des revendications 1 à 6, pour la fabrication directe de récipients possédant au moins une anse.
